Europäisches Patentamt

European Patent Office

Office européen des brevets

(11) Veröffentlichungsnummer: 0 176 701
A2

## (12) EUROPÄISCHE PATENTANMELDUNG

(21) Anmeldenummer: 85109819.4

(22) Anmeldetag: 05.08.85

(51) Int. Cl.⁴: B 08 B 11/04
B 60 R 13/06

(30) Priorität: 28.09.84 DE 8428694 U

(43) Veröffentlichungstag der Anmeldung:
09.04.86 Patentblatt 86/15

(84) Benannte Vertragsstaaten:
AT BE CH FR GB IT LI NL SE

(71) Anmelder: Dimatec System AG
Schulhausstrasse 3
CH-8617 Mönchaltorf(CH)

(72) Erfinder: Gehring, René
Irchelstrasse 2
Ch-8172 Niederglatt(CH)

(74) Vertreter: Blum, Rudolf Emil Ernst et al,
c/o E. Blum & Co Patentanwälte Vorderberg 11
CH-8044 Zürich(CH)

(54) Vorrichtung zum Behandeln von Automobil-Fensterscheiben in ihrem Randbereich.

(57) Auf den unbeweglichen Autofensterscheiben werden elastische Dichtrippen im Fensterrandbereich aufgebracht. Vorher muss diese Stelle des Fensters gereinigt und vorbehandelt werden. Hierzu werden verschiedene Flüssigkeiten über eine Zerstäuberdüse (2) aufgetragen und dann verwischt. Das Verwischen erfolgt numehr z.B. mittels eines Filzklötzchens (18), das z.B. pro Fenseterscheibe gegen ein neues ausgewechselt wird. Zerstäuberdüse (2), Filzklötzchen (18) und eine zur Anlage an der Fensterscheibe (1) bestimmte Abstützrolle (12) sitzen auf einer quer zur Fahrtrichtung der Vorrichtung längs des Fensterrandes schwenkbaren Wippe (11). Die Wippe (11) ist auch noch um eine vertikale Achse (24) schwenkbar bei Richtungsänderung längs des Fensterrandes. Durch das Filzklötzchen (18) wird der Sprühfilm ohne Spritzen verwischt, und durch die Wippe (11) kann das Filzklötzchen (18) und die Zerstäuberdüse (2) auch einer verwundenen Form der Fensterfläche ohne gesonderte komplizierte Steuerung entlanggeführt werden.

Fig.1

Vorrichtung zum Behandeln von Automobil-Fensterscheiben in ihrem Randbereich
------------------------------------------------------------

Die Erfindung betrifft eine Vorrichtung zum Behandeln von Automobil-Fensterscheiben in ihrem Randbereich,
vor dem unbeweglichen Einbau der Fensterscheiben in die
Karosserie, mit einem eine Zerstäuberdüse aufweisenden
Sprühkopf für eine Behandlungsflüssigkeit und einer den
Sprühkopf nachfolgende Wischeinrichtung zum Verwischen der
Behandlungsflüssigkeit, wobei der Sprühkopf und die Wischeinrichtung dazu bestimmt sind mittels einer Betätigungseinrichtung in Fahrtrichtung entlang dem Randbereich der
Fensterscheibe bewegt zu werden.

Eine solche Vorrichtung ist bereits vorgeschlagen worden. Die
unbeweglich in die Karosserie einzubauenden Fensterscheiben
werden im Randbereich mit einer Dichtungswulst aus Polyurethan versehen. Damit dieses Material gut an der Glasscheibe anhaftet, muss letztere vorbehandelt werden. Dieses Vorbehandeln besteht zuerst in einem Reinigungsvorgang und anschliessend in einer Weiterbehandlung (Vorprimern), wobei letztgenannter Behandlungsvorgang ein gewisses Anätzen der Glasscheibenoberfläche umfasst. Bei der
eingangs genannten, bekannten Vorrichtung besteht die
Wischeinrichtung aus einer angetriebenen Topfbürste, die
also mit ihrer freien Stirnfläche entlang dem Randbereich
der Fensterscheibe geführt wird. Im Zentrum der Topfbürste
liegt die Zerstäuberdüse des Sprühkopfes. Diese Vorrichtung
bringt verschiedene Nachteile mit sich. Durch die auftretenden Fliehkräfte an der drehenden Topfbürste lässt es
sich nicht vermeiden, dass die Behandlungsflüssigkeit verspritzt wird und demzufolge auch an nicht gewünschte Bereiche der Fensterscheiben gelangen kann. Es ist klar,
dass dies besonders bei der erwähnten ätzenden Behandlungsflüssigkeit ein unzumutbarer Vorgang ist. Weiterhin ist
nachteilig, dass die Topfbürste immer wieder gereinigt werden muss, was mit einer Demontage, Reinigungsvorgang und

- 2 -

dann wieder Montage verbunden ist. Dieses sind erhebliche Verlustzeiten, und dieser Reinigungsvorgang sowie die Montage und Demontage können nicht automatisiert werden. Ein weiterer Nachteil ist darin zu sehen, dass der Durchmesser der Topfbürste verhältnismässig gross ist, da sich ja in ihrem Zentrum die Zerstäuberdüse mit Sprühkopf befinden. Durch diesen grossen Durchmesser der Topfbürste können nicht in idealer Weise kleine Krümmungsradien entsprechend der jeweiligen Form der zu behandelnden Fensterscheibe gefahren werden. Das bedeutet, dass bei einer Richtungsänderung, sozusagen in den Ecken der Fensterscheibe, ein zu grosser Bereich des Randbereiches der Fensterscheibe behandelt wird. Dieser behandelte Bereich entspricht dann jedenfalls nicht dem Bereich, auf den dann später die erwähnte Polyurethan-Wulst gelegt wird.

Es wird die Schaffung einer Vorrichtung bezweckt, mit der die vorerwähnten Nachteile vermieden werden können.

Die Vorrichtung gemäss der Erfindung ist dadurch gekennzeichnet, dass eine zum Abstützen an der Fensterscheibe bestimmte Abstützrolle vorhanden ist, die zusammen mit dem Sprühkopf und der Wischeinrichtung auf einer Wippe sitzt, die um eine Wippenachse schwenbar an einem Halter der Betätigungseinrichtung angelenkt ist, wobei die Schwenkebene quer zur Fahrtrichtung liegt, dass die Wippe um eine vertikale Drehachse schwenkbar ist, dass die Wischeinrichtung ein von der Wippe auswechselbar gehaltenes flächiges Schiebestück umfasst, das dazu bestimmt ist an der Fensterscheibe anliegend verschoben zu werden, dass die Wippenachse zwischen dem Schiebestück und der Rolle liegt und die vertikale Drehachse zwischen dem Schiebestück und der Zerstäuberdüse liegt.

In der Zeichnung ist ein Ausführungsbeispiel der Vorrichtung gemäss der Erfindung erläutert. Es zeigen:

Fig. 1 einen Teil der Vorrichtung in Vorderansicht, beim Behandeln einer Fensterscheibe,

Fig. 2 den Teil der Vorrichtung nach Fig. 1, in

einer um 90° gedrehten Stellung,

Fig. 3 den in Fig. 1 gezeigten Teil der Vorrichtung, in Rückenansicht und teilweise geschnitten,

Fig. 4 den in Fig. 3 gezeigten Teil der Vorrichtung mit einem Halter, wobei die Wippe in ihren beiden Endstellungen gezeigt ist,

Fig. 5 eine schematische Darstellung der Vorrichtung in Draufsicht, und

Fig. 6 eine Einrichtung für die Vorrichtung zum Zuliefern des flächigen Schiebestücks und ebenfalls zu dessen Auswechslung.

Mit der gezeigten Vorrichtung wird eine Automobil-Fensterscheibe 1 in ihrem Randbereich behandelt. Dieses Behandeln kann in einem Reinigungsvorgang bestehen, wobei über eine Zerstäuberdüse 2 eine Reinigungsflüssigkeit in einem Sprühkegel 3 auf die Scheibe 1 aufgesprüht wird. Die Behandlung der Fensterscheibe 1 kann aber auch in einem Vorbereiten (Vorprimern) für den späteren Kunststoffauftrag bestehen. In diesem Fall wird dann über die Zerstäuberdüse 2 eine solche Vorbereiter-Flüssigkeit versprüht. Die Zerstäuberdüse 2 ist bei einem Sprühkopf 4 vorhanden, dessen Längsachse 5 gegenüber der Vertikalen geneigt ist, so dass also der Sprühkegel 3 dem äussern Rand 6 der Fensterscheibe 1 zugewandt ist, um ein Verspritzen des Scheibeninnern zu vermeiden.

Der Sprühkopf 4 ist mit vier Leitungsanschlüssen 7-10 versehen, wobei über den Anschluss 7 Druckluft zuströmt um eine in der Zerstäuberdüse 2 sitzende, nicht dargestellte Düsennadel zu öffnen, die im Ruhezustand durch eine Feder die Zerstäuberdüse 2 verschliesst. Der Leitungsanschluss 9 dient zur Zufuhr der jeweiligen Behandlungsflüssigkeit, und der Leitungsanschluss 10 dient für den Rücklauf dieser Behandlungsflüssigkeit. Der Leitungsanschluss 8 dient zur Zuführung von Sprühluft.

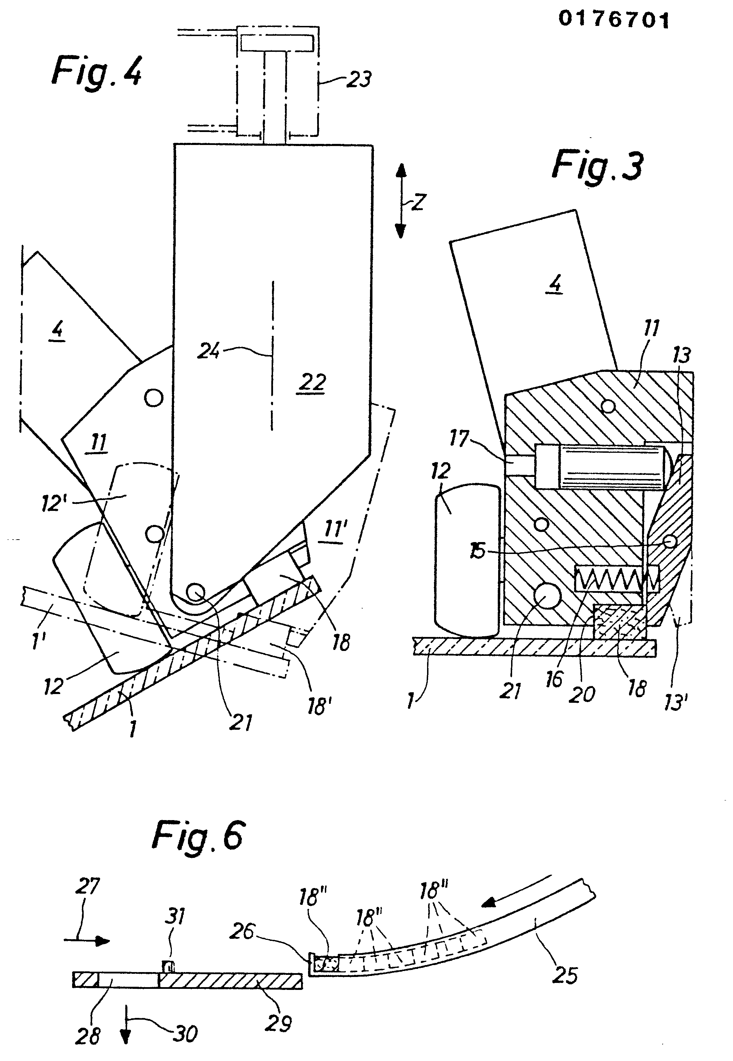

Der Sprühkopf 4 ist an einer Wippe 11 befestigt, die in Fig. 3 im Schnitt dargestellt ist. Die Wippe 11

- 4 -

trägt drehbar eine zum Abstützen an der Fensterscheibe 1 bestimmte Abstützrolle 12 sowie einen schwenkbar gelagerten Klemmhebel 13. Die Abstützrolle 12 ist um eine Rollenachse 14 drehbar.

Der Klemmhebel 13 ist um eine Achse 15 schwenkbar, wobei die Offenstellung 13' des Klemmhebels 13 nach Fig. 3 durch Betätigen mittels einer Feder 16 eingenommen wird. Die in Fig. 3 mit voll ausgezogenen Linien gezeigte Klemmstellung des Klemmhebels 13 wird durch Betätigen mittels eines Druckfluids eingenommen, für das der Leitungsanschluss 17 vorhanden ist.

Die gezeigte Vorrichtung hat eine zum Verwischen der Behandlungsflüssigkeit 3 dienende Wischeinrichtung 18, die also in Fahrtrichtung 19 nach Fig. 5 der Behandlungsflüssigkeit 3 nachfolgt. Die Wischeinrichtung 18 ist als von der Wippe 1 auswechselbar gehaltenes, flächiges Schiebestück ausgebildet, das dazu bestimmt ist an der Fensterscheibe 1 anliegend verschoben zu werden. Beim dargestellten Ausführungsbeispiel ist das flächige Schiebestück 18 als rechteckiger Klotz ausgebildet. Die Wippe 11 hat eine Schulter 20, an der das klotzartige Schiebestück 18 anliegt. Andererseits liegt der geschlossene Klemmhebel 13 am Schiebestück 18 an. Auf diese Weise wird also das Schiebestück 18 durch Klemmen mittels des Klemmhebels 13 von der Wippe 11 getragen.

Die Wippe 11 mit dem Sprühkopf 4 und mit Klemmhebel 13 sowie mit Abstützrolle 12 ist um eine Wippenachse 21 an einem Halter 22 schwenkbar angelenkt. Aus Fig. 3 ist ersichtlich, dass die Wippenachse 21 zwischen dem Schiebestück 18 und der Abstützrolle 12 liegt. In Fig. 4 sind die beiden Endstellungen der Wippe 1 gezeigt. Die eine Endstellung ist mit voll ausgezogenen Linien gezeigt und die andere Endstellung 11' ist strichpunktiert dargestellt. In letztgenannter Stellung 11' der Wippe befindet sich die Abstützrolle in der Stellung 12', und das Schiebestück befindet sich in der Stellung 18'. Diese Stellungen 11', 12' und 18' werden eingenommen, wenn die Fensterscheibe eine Stellung 1' aufweist. Aus Fig. 4 ist somit ersichtlich, dass die zu behandelnde Fensterscheibe 1 irgendeine Stellung zwischen den beiden dargestellten Stellungen haben kann, wobei die Wippe 1 mit Sprühkopf 4, Abstützrolle 12 und Schiebestück 18 durch Schwenken um die Wippenachse 21 dieser Stellung der Fensterscheibe zum Behandeln nachgeführt werden kann, wobei der Halter 22 seine dargestellte vertikale Lage beibehält. Da die vorerwähnten Schräglagen der Fensterscheibe in verschiedener Höhenlage vorliegen können, wird die vertikale Zustellbewegung des Halters 22 in der z-Achse mit einem von einem Druckfluid betreibbaren Kolben-Zylinder-Aggregat 23 durchgeführt, wobei dieses Aggregat 23 in der Zeichnung lediglich schematisch angedeutet ist. Die Steuerung der vertikalen Hubbewegung des Halters 22 in der z-Achse kann z.B. druckabhängig erfolgen, so dass also beim Erreichen eines vorbestimmten Anlagedruckes der Wippe 11 über das Schiebestück und die Abstützrolle 12 auf die Fensterscheibe 1 die Zustellbewegung abgeschaltet wird. Es ist somit Gewähr gegeben, dass das Schiebestück 18 bei den unterschiedlichsten Neigungen der Fensterscheibe 1 immer mit gleichbleibender Andrückkraft an der Fensterscheibe 1 anliegt.

Die Achse 14 der Abstützrolle 12 liegt gekreuzt zur Wippenachse 21. Die Bewegung des Halters 22 innerhalb der Horizontalen, also in der x-Achse und y-Achse erfolgt durch eine nicht dargestellte numerisch gesteuerte (NC) Anlage, so dass der Halter 22 mit den daran hängenden erwähnten Bauteilen entlang dem Randbereich der jeweils zu behandelnden Fensterscheibe geführt wird. Der Halter 22 mit den daran hängenden Bauteilen 4, 11, 12, 13 und 18 ist noch um eine vertiale Drehachse 24 schwenkbar. Diese vertikale Drehachse 24 liegt zwischen dem Schiebestück 18 und der Achse 5 des Sprühkopfs 4. Durch diese Drehbarkeit des Halters 22 um die vertikale Drehachse 24 werden gemäss Fig. 5 der Sprühkegel 3 und das nachfolgende Schiebestück 18 immer in dieser Reihenfolge der Richtungsänderung des Fensterscheibenrandes nachgeführt, wobei auch kleine Radien gefahren werden können. Die Schwenkebene,in der sich die Wippe 11 mit Sprühkopf 4 und Rolle 12 sowie Schiebestück 18 je nach der Neigung der Fensterscheibe schwenken können, liegt also quer zur Fahrtrichtung 19 gemäss Fig. 5. Die vertikale Drehachse 24 und die Wippenachse 21 liegen also zueinander gekreuzt.

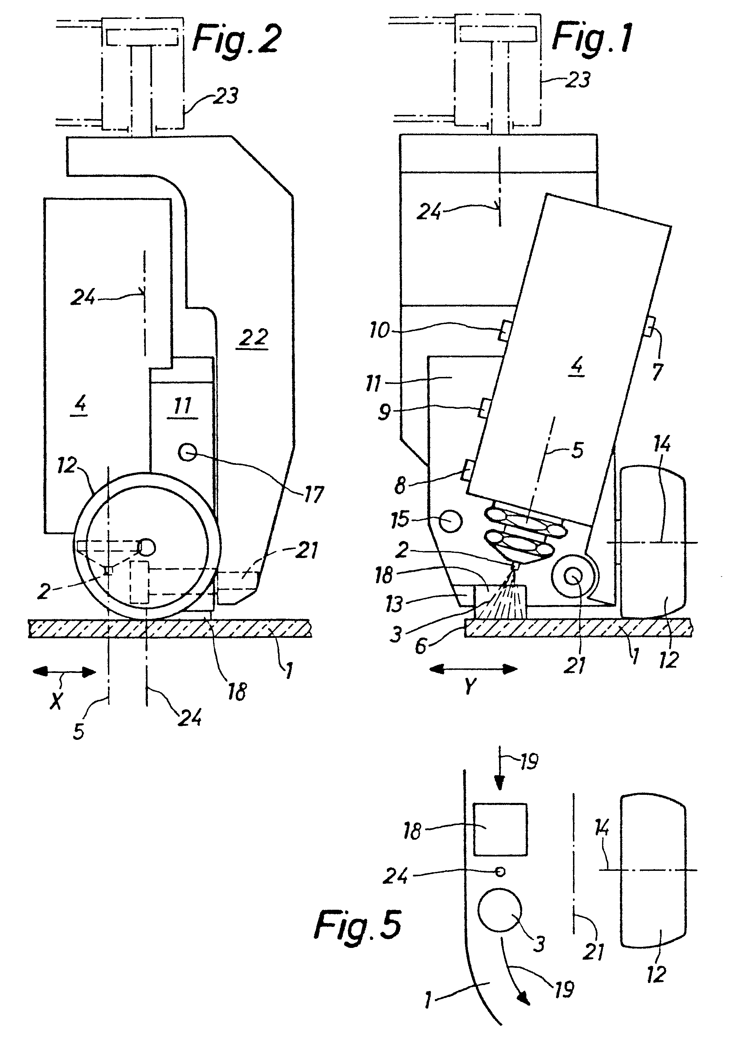

Wie bereits erwähnt, wird also das Schiebestück 18 durch den Klemmhebel 13 an der Wippe 11 auswechselbar durch Klemmen festgehalten. Man kann z.B. so vorgehen, dass für jede zu behandelnde Fensterscheibe ein neues Schiebestück 18 verwendet wird. Es ist natürlich auch möglich für mehrere zu behandelnde Fensterscheiben ein und dasselbe Schiebestück 18 zu verwenden. Nach ein- oder mehrmaligem Gebrauch wird aber das Schiebestück 18 gegen ein neues ausgewechselt. In Fig. 6 ist in schematischer Darstellung gezeigt, wie ein solches Auswechseln des Schiebestückes 18 erfolgen kann. Mittels eines Kanalstückes 25 eines nicht dargestellten Vibrationsförderes werden klotzartige Schiebestücke 18" fortlaufend gegen einen Anschlag 26 gefördert. In diesem Bereich sind die Seitenwände des Kanals 25 entfernt. Der in den Figuren 1 - 4 dargestellte Teil der Vorrichtung wird mittels der erwähnten numerisch gesteuerten Einheit der Betätigungseinrichtung in Richtung eines Pfeiles 27 in der Ebene des zuvorderst liegenden Schiebestückes 18" bewegt. Hierbei gelangt die Wippe 11 über eine Durchbrechung 28 einer ortsfesten Platte 29. An dieser Stelle wird das Druckmedium für den Anschluss 17 an der Wippe abgestellt, so dass der Klemmhebel 13 durch die Feder 16 geöffnet wird. Das Schiebestück 18 fällt dann durch die Durchbrechung 28 in Pfeilrichtung 30 nach unten. Auf dem weiteren Weg des Halters 22 mit den daran befestigten Bauteilen in Richtung des Pfeiles 27 gelangt ein ortsfester Anschlag 31 in den Bereich der Wippe, an dem sich das Schiebestück 18 befunden hat. Sollte dieses noch nicht nach unten gefallen sein, so wird es nunmehr durch den Anschlag 31 von der Wippe 11 entfernt. Beim Weiterfahren in Richtung des Pfeiles 27 gelangt die Wippe zum zuvorderst liegenden Schiebestück 18". Hier wirkt nun wieder das Druckmedium über den Leitungsanschluss 17, so dass der Klemmhebel das zuvorderst liegende Schiebestück 18" an der Wippe festklemmen kann. Hierauf kann nunmehr wieder eine Fensterscheibe in der vorbeschriebenen Weise behandelt werden. Das Auswechseln des Schiebestückes 18 ist somit vollautomatisch durchgeführt worden.

Aus dem Vorstehenden ist klar geworden, dass sowohl das Behandeln der Fensterscheibe 1 als auch das Auswechseln der Wischeinrichtung 18 vollautomatisch durchgeführt werden kann.

In der Praxis hat sich ein Schiebestück 18 aus Filz besonders bewährt. Das klotzartige Schiebestück 18 könnte aber auch aus einem Kunststoff, wie z.B. Schaumstoff, Schaumgummi bestehen. Anstelle eines klotzförmigen Schiebestücks 18 könnte aber auch ein Stoffstück z.B. aus einem Gewebe oder einem Vlies verwendet werden, welches Stoffstück durch Klemmen oder Saugen an der Wippe 11 festgehalten werden kann. In diesem Fall muss dann der Klemmhebel 13 durch ein anders gestaltetes Befestigungsorgan ersetzt werden.

- 1 -

Patentansprüche
----------------

1. Vorrichtung zum Behandeln von Automobil-Fensterscheiben (1) in ihrem Randbereich, vor dem unbeweglichen
Einbau der Fensterscheiben (1) in die Karosserie, mit einem eine Zerstäuberdüse (2) aufweisenden Sprühkopf (4) für
eine Behandlungsflüssigkeit (3) und einer dem Sprühkopf
(4) nachfolgenden Wischeinrichtung (18) zum Verwischen der
Behandlungsflüssigkeit (3), wobei der Sprühkopf (4) und
die Wischeinrichtung (18) dazu bestimmt sind mittels einer Betätigungseinrichtung (22) in Fahrtrichtung (19) entlang
dem Randbereich der Fensterscheibe (1) bewegt zu werden,
dadurch gekennzeichnet, dass eine zum Abstützen an der
Fensterscheibe (1) bestimmte Abstützrolle (12) vorhanden
ist, die zusammen mit dem Sprühkopf (4) und der Wischeinrichtung (18) auf einer Wippe (11) sitzt, die um eine Wippenachse (21) schwenkbar an einem Halter (22) der Betätigungseinrichtung angelenkt ist, wobei die Schwenkebene
quer zur Fahrtrichtung (19) liegt, dass die Wippe (11) um
eine vertikale Drehachse (24) schwenkbar ist, dass die
Wischeinrichtung als von der Wippe (11) auswechselbar gehaltenes flächiges Schiebestück (18) ausgebildet ist, das
dazu bestimmt ist an der Fensterscheibe (1) anliegend verschoben zu werden, dass die Wippenachse (21) zwischen dem
Schiebestück (18) und der Rolle (12) liegt und die vertikale Drehachse (24) zwischen dem Schiebestück (18) und der
Zerstäuberdüse (2) liegt.

2. Vorrichtung nach Anspruch 1, dadurch gekennzeichnet, dass das flächige Schiebestück (18) ein rechteckiger Klotz ist.

3. Vorrichtung nach Anspruch 1, dadurch gekennzeichnet, dass die Wippe (11) einen Klemmhebel (13) aufweist, der das Schiebestück (18) durch Klemmen festhält.

4. Vorrichtung nach Anspruch 3, dadurch gekennzeichnet, dass die Klemmstellung des Klemmhebels (13)
durch Betätigen mittels eines Druckfluids (17) eingenommen
wird, und dass die Offenstellung des Klemmhebels (13)
durch Betätigen mittels einer Feder (16) eingenommen wird.

5. Vorrichtung nach Anspruch 1, dadurch gekennzeichnet, dass die Rollenachse (14) und die Wippenachse
(21) zueinander gekreuzt liegen.

6. Vorrichtung nach Anspruch 1, dadurch gekennzeichnet, dass die vertikale Drehachse und die Wippenachse
(21) zueinander gekreuzt liegen.

7. Vorrichtung nach Anspruch 1, dadurch gekennzeichnet, dass der Sprühkopf (4) vier Leitungsanschlüsse
(7-10) für unter Druck stehende Fluide aufweist, wobei ein
Leitunganschluss (9) für den Zulauf und ein Anschluss (10)
für den Rücklauf einer Behandlungsflüssigkeit dient, ein
dritter Leitungsanschluss (8) für Sprühluft zum Zerstäuben
dieser Behandlungsflüssigkeit bestimmt ist und der vierte
Leitungsanschluss (7) für Druckluft zum Oeffnen der von einer verschiebbaren Düsennadel verschlossenen Zerstäuberdüse (2) dient.

8. Vorrichtung nach Anspruch 4, dadurch gekennzeichnet, dass die Wippe (11) einen Leitungsanschluss (17)
für Druckluft zum Betätigen des Klemmhebels (13) aufweist.

9. Vorrichtung nach Anspruch 1, dadurch gekennzeichnet, dass sie in den beiden x- und y-Koordinaten der
Horizontalen mittels einer numerisch gesteuerten Einheit
der Betätigungseinrichtung und in der vertikalen z-Koordinate mittels eines von einem Druckfluid betreibbaren Kolben-Zylinder-Aggregates (23) der Betätigungseinrichtung bezüglich einer festgelegten Automobil-Fensterscheibe bewegbar ist.

0176701

Fig.2

Fig.1

Fig.5

*Fig. 4*

*Fig. 3*

*Fig. 6*